# EUROPEAN PATENT SPECIFICATION

(11) **EP 4 217 992 B1**
(45) Date of publication and mention of the grant of the patent: **28.08.2024**
(21) Application number: 21810422.2
(22) Date of filing: 22.09.2021
(51) Int. Cl.: G10G 7/00, G09B 15/06, G10C 3/12

(54) **SUPPORT DEVICE**
STÜTZVORRICHTUNG
DISPOSITIF DE SUPPORT

(30) Priority: 22.09.2020 IT 202000005308 U
(43) Date of publication of application: 02.08.2023
(73) Proprietor: Mazzotti, Gilberto, 48121 Ravenna (IT)
(72) Inventor: Mazzotti, Gilberto, 48121 Ravenna (IT)
(74) Representative: Roncuzzi, Davide
(86) International application number: PCT/IB2021/058635
(87) International publication number: WO 2022/064380

(56) References cited:
- WO-A2-2009/040578
- US-A- 1 359 928
- US-A- 5 753 840
- US-A- 591 800

## Description

The present invention relates to a support device provided with a rest sliding along a given direction. In particular, the present invention refers to a support device provided with a rest sliding along a given direction and usable during practice of the piano or of an instrument provided with a similar keyboard. More in detail, the present invention refers to a support device provided with a rest sliding along a given direction and is adjustable in height to be properly used during practice of the piano or of an instrument provided with a similar keyboard so as to facilitate the learning of the correct posture.

### DESCRIPTION OF THE STATE OF THE ART

Each time one approaches the study of a musical instrument, a substantial portion of time is spent explaining to students what the posture of their body should be and the movement of given parts of the same through which it is possible to produce harmonious sounds and appropriate volume by optimizing the muscular effort exerted. In particular, the aim is to continuously play with relaxed muscles for extended periods of time musical pieces having increasing technical complexity.

When the instrument that one wishes to learn to play is the piano or any other instrument provided with a keyboard similar to that of the piano, a teacher must focus the attention on the posture of the upper part of the body, and in particular, of the kinematic chain that, starting from the upper part of the body, reaches the hands and comprises shoulders, arms, wrists and, of course, hands. Assuming an incorrect position of at least one of these body regions could cause aches, pains and severe tendinitis and, ultimately, compromise the activity of a performer. On the other hand, to learn the posture and the measures for avoiding muscularly complicated situations, it would be necessary to practice with the constant support of an expert teacher capable of highlighting the slightest deviation of any element of the kinematic chain described above from the optimal posture, in order to avoid assuming incorrect positions which, over time, could complicate the performance of long and technically complex pieces. On the other hand, each piano teacher follows various students but only one at a time and, therefore, must divide their time between them, with the result that the continuous support of a teacher is not normally available, but above all, it is linked to very precise practice-times from which it is impossible to derogate.

It is easy to understand that the lessons are planned, which may be a limited number each week, that the student will have to play at length alone in order to prepare the pieces to be performed in the next lesson and that this situation can produce the drawback that wrong postural habits can be acquired between one lesson and the other with their teacher, which must be corrected with expenditure of time and energy by the student and the teacher.

In consideration of the situation described above, it would be desirable to arrange a simple and inexpensive device which, in addition to limiting and possibly overcoming the drawbacks typical of the state of the art known illustrated above, can be used when desired and for an indefinite time in order to simplify the step of learning the postural models most suitable for practice of keyboard instruments and defines a new standard of equipment for these instruments that can be used by beginners without requiring the contribution of a teacher with the knowledge that the posture assumed during practice will be the correct one and that therefore maximum attention can be devoted to learning how best to perform the assigned pieces of music.

Systems known in the art can be found in US 591 800 A (J.O. FINNBLADE AND O.T. WESTLIN) 12 October 1897, US 1 359 928 A (FREDERICK STAFFORD LEWIS) 23 November 1920, WO 2009/040578 A2 (RUSSELL JEREMY [GB]) 2 April 2009 and US 5 753 840 A (SABOIA DE ALBUQUERQUE MARIA EU [FR]) 19 May 1998.

### SUMMARY OF THE PRESENT INVENTION

The present invention relates to a support device provided with a rest sliding along a given direction. In particular, the present invention refers to a support device provided with a rest sliding along a given direction and usable during practice of the piano or of an instrument provided with a similar keyboard. More in detail, the present invention refers to a support device provided with a rest sliding along a given direction and is adjustable in height to be properly used during practice of the piano or of an instrument provided with a similar keyboard to facilitate the learning of the correct posture.

The aforementioned drawbacks are solved by the present invention according to at least one of the following claims. According to some embodiments of the present invention, a slide is made for a support device comprising a frame provided with a bar having a given cross-section, developed along a central axis and delimited by two first coupling portions, each arranged to couple with a support adjustable in height designed to keep said bar selectively horizontal; said bar having a longitudinal raised portion which carries a cylindrical member at the top which is designed to guide said slide in a longitudinally free and angularly fixed manner by the interposition of an axial bearing and being delimited by a flat longitudinal face parallel to the central axis on the side opposite to the cylindrical member; a rest member being carried by a unit for adjusting the respective position relative to said central axis.

According to an embodiment, the slide rigidly carries a bracket provided with a carriage coupled to said cylindrical member bilaterally in a direction transverse to said central axis in a freely sliding manner.

According to an embodiment, said adjustment unit comprises an elongated support carried by said slide to which said rest member is screw-coupled in order to be adjustable in height relative to said central axis.

According to an embodiment, said support extends along a skewed axis relative to said central axis.

According to an embodiment, said bracket has an upper portion coupled with said slide and supporting said adjustment unit. According to an embodiment, said bracket has an overturned L-shape and has a lateral portion transverse to said upper portion which carries said carriage, in turn provided with at least one pair of first wheels coupled in a rolling manner with said longitudinal face.

According to an embodiment, said bracket has an overturned C-shape, provided with respective opposite sides and arranged on sides opposite to said upper portion where each of said sides faces at least partially one of said longitudinal walls; each said side ending with a flap transverse to the respective said side and bringing a second wheel into rolling contact with a corresponding said longitudinal wall.

According to an embodiment, said support has a base coupled longitudinally to said slide by a rectilinear motion guide carried at the top by said slide and provided with a groove for said base.

According to an embodiment, said groove is oriented rectilinear and skewed relative to said central axis. According to an embodiment, said rest member is delimited by a spherically shaped surface or at least hemispherical at the top.

According to some embodiments of the present invention, a support device is provided comprising a frame provided with a bar having a given cross-section, developed along a central axis and delimited by two first coupling portions, each arranged to be coupled with a support adjustable in height designed to keep said bar selectively horizontal; said bar having a longitudinal raised portion which carries a cylindrical member at the top which acts as a guide for at least one slide coupled in a longitudinally free and angularly fixed manner by the interposition of an axial bearing; said slide being shaped as described starting from page 6. According to an embodiment, said bar is made of two half-bars having identical cross-section, each provided with a respective raised portion and with a respective cylindrical member portion; said two half-bars being coupled in a longitudinally continuous manner by selectively releasable connection means.

According to an embodiment, said two half-bars have an identical or different longitudinal extension.

According to an embodiment, each said raised portion has an extension different than the extension of the corresponding said cylindrical member portion.

According to an embodiment, said connection means comprise at least a first screw housed in an end position in a respective said raised portion; a perforated plate for connecting the two said half-bars where said perforated plate has at least one hole for each said first screw.

Any further embodiments of the present invention are defined by the claims.

### BRIEF DESCRIPTION OF THE FIGURES

Further characteristics and advantages of the support device according to the present invention will become clear from the following description, shown with reference to the attached figures which illustrate at least one non-limiting embodiment thereof, in which identical or corresponding parts of the device itself are identified by the same reference numbers.

In particular:
- figure 1 is a front elevation view of a first preferred embodiment of a support device according to the present invention illustrated in combination with a keyboard instrument;
- figure 2 is a side elevation view of Figure 1 in which some parts have not been shown for clarity;
- figure 3 is a plan view of Figure 1 in which some parts have not been shown for clarity;
- figure 4 is a side elevation view of a second preferred embodiment of Figure 1; and
- figure 5 is a front elevation view of a third preferred embodiment of Figure 1.

### DETAILED DESCRIPTION OF THE PRESENT INVENTION

Before describing, in detail, the preferred embodiments of the present invention or details thereof, it is considered useful to specify that the relative scope is not limited to the particular embodiments described in the following. The disclosure and description in the present document are illustrative and explanatory of one or more currently preferred embodiments and variants, and it will be clear to an expert skilled in the art that various changes in design, organization, order of operation, operating means, in the structures and position of the equipment, in the methodology and use of equivalent mechanical means can be made without thereby being extraneous to the spirit of the present invention.

Furthermore, it is to be understood that the accompanying drawings are intended to clearly illustrate and disclose embodiments currently preferred by one of the experts skilled in the art, but are not drawings that illustrate how these embodiments should be carried out in reality or actual representations of final products; on the contrary, these figures may comprise simplified conceptual views to facilitate understanding or to allow an easier and faster explanation to be provided. Furthermore, the relative dimensions and arrangement of the components may differ from those shown and still function according to the spirit of the present invention.

On the other hand, it will be understood that various directions such as "lower", "upper", "left", "right", "front", "rear" and so on are performed only with respect to the explanation in combination with the drawings and that the components can be oriented differently, for example during transport and production, as well as during operation. Since many different and distinct embodiments can be made within the concepts disclosed herein, and since there are many changes that can be made to the embodiments described herein, it is to be understood that the details given in the following are to be interpreted as illustrative and not limitative of the spirit of the present invention.

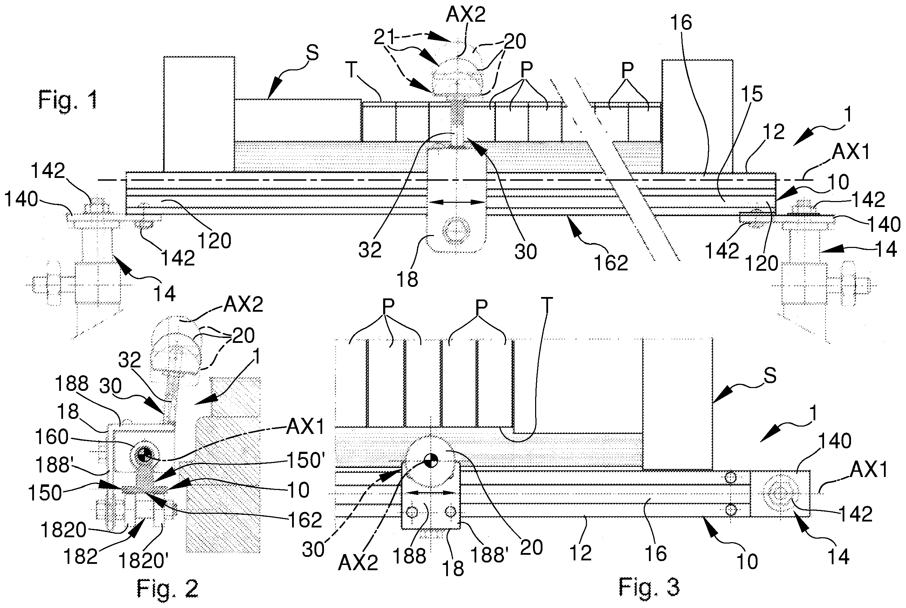

In Figure 1, number 1 generally denotes a support device that can be positioned at a distance definable according to the need, from a keyboard T of a musical instrument S such as the piano, or of an instrument provided with a similar keyboard T, so as to facilitate the learning of the correct body posture, and in particular of the kinematic chain comprising the shoulders, arms, wrists and hands which are used to operate the keys P of said keyboard. In Figures 1-3, the support device 1 has been illustrated facing a piano S in a position of use.

In particular, the support device 1 comprises a frame 10 provided with the bar 12 which extends in a given direction identified by an axis AX1 and has a cross-section having a given shape, better shown in Figure 2. The bar 12 has a longitudinal raised portion 15 that carries at the top a cylindrical member 16, which develops, in turn, along the central axis AX1 and is designed to act as a guide for at least one slide 18 coupled to the cylindrical member 16 in a longitudinally free and angularly fixed manner by the interposition of an axial bearing 160 (Figure 2). The raised portion 15 is laterally delimited by the external longitudinal walls 150 and 150' which, without limiting the scope of the present invention, are parallel and transverse to the central axis AX1. The slide 18 carries at least one rest member 20 by an adjustment unit 30 for the respective position relative to said central axis AX1. In the attached figures, the rest member 20 has been illustrated in three positions distant from the axis AX1 in different manner, purely by way of example.

Each rest member 20 is delimited by a spherically or at least hemispherical shaped surface 21 to be designed to provide a rest that matches with the palm of a user's hand.

The bar 12 is delimited by two coupling portions 120, each of which is arranged to couple with a support 14 in a fixed and selectively releasable manner by a plate 140 and at least a threaded member 142. Each support 14 has been illustrated in the attached figures schematically by means of its upper extremities and telescopically carried by a tripod, known and not illustrated for design economy, so as to be adjustable in height.

The combined use of the two supports 14 determines the possibility of adjusting and keeping the bar 12 horizontal, as well as positioning it at a distance definable according to the need, from the keyboard T simply by translating the whole of the supports 14 and bar 12, therefore each slide 18 and relative rest member 20 carried by said bar 12.

With particular reference to Figures 1 and 2, the slide 18 carries a bracket 180 provided with a carriage 182 which is coupled to the cylindrical member 16 bilaterally in a transverse direction to the central axis AX1 in a freely sliding manner. The bracket 180 has an overturned L-shape and has, at the top, an upper flat portion 188 having a small extension that couples, at the top, with the slide 18 in a matching manner, is rigidly fixed and selectively releasable by a plurality of threaded members and carries the adjustment unit 30. Whereby the bracket 180 is rigidly coupled to the slide 18.

Again, with reference to Figure 2, the adjustment unit 30 comprises an elongated support 32 which is carried by the slide 18 and extends along a skewed axis AX2 relative to the central axis AX1 to which the rest member 20 is screw-coupled in order to be adjustable in height relative to the central AX1 axis and removable. In fact, each user is provided with hands whose palm has different dimensions, and therefore each rest member 20 can be shaped in a personalized manner or, more simply, delimited by a surface, the spherical or at least hemispherical surface of which has a given radius. Furthermore, the bar 12 is delimited from a side opposite to the cylindrical member 16 by a flat longitudinal face 162 parallel to the central axis AX1 and to the bracket 180 and has a lateral portion 188' having a greater extension, which is rigidly connected and extends transversely from an edge of the upper portion 188 having a small extension. This lateral portion 188' carries at the bottom the carriage 182, which comprises at least a pair of first wheels 1820/1820' coupled in a rolling manner with the longitudinal direction 162.

The use of the support device 1 is easily understood and requires no further explanation. On the other hand, it may be useful to specify that, normally, a support device 1 carries two slides 18 which are each movable independently of one another along the axis AX1 on the cylindrical member of the bar 12 and, therefore, each support device 1 comprises two rest members 20, one for each hand of a user. Once the distance of the bar 12 from the keyboard T and the relative height have been adjusted, the distance of the two rest members 20 from the axis AX1 can be finely adjusted by screwing or unscrewing on the respective support 32. Naturally, if deemed appropriate, each rest member 20 can be adjusted to a preferred distance from the axis AX1. At the end of the adjustment step, the support device 1 will be ready to be used during the execution of musical pieces and to act as a reference for the palms of the user's hands, which move along the keyboard T so as to allow the user to move and position their own kinematic chains, including shoulders, arms, wrists and hands, in an appropriate manner to operate the keys P of the said keyboard. In particular, the rest members 20 will be moved by the user in front of the keyboard T and will act as a constraint to guide their hands to move along an imaginary line arranged parallel to the axis AX1 and traced by the rest members 20.

Finally, it is clear that modifications and variants can be made to the support device 1 described and illustrated herein without thereby departing from the scope of the present invention.

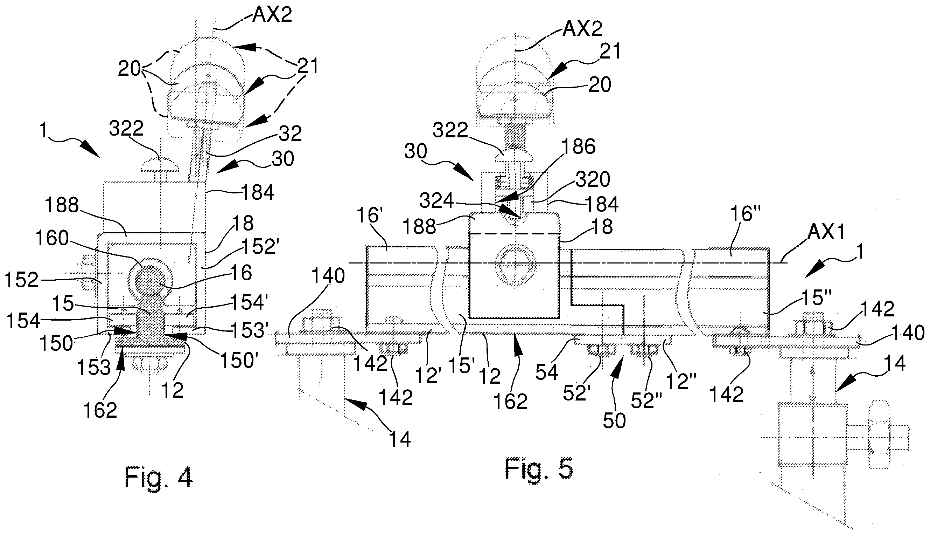

For example, with reference to Figures 4 and 5, the support 32 has at the bottom a base 320 coupled to the slide 18 by means of a rectilinear motion guide 184 carried at the top by the upper portion 188 of the slide 18 and provided with a groove 186 for the base 320, where the groove 186 is oriented rectilinear, transverse and skewed relative to the central axis AX1. The position of the base 320 inside the guide 184 can be fixed by a pin 322 movable against the thrust of a spring, where said pin 322 couples in a hole 324 of a plurality of holes made transversely to the axis AX1 in the upper portion 188.

With reference to this particular way of coupling the support 32 to the upper portion 188 of the bracket 180 by the base 320 and of the relative guide 184, it should be specified that also the "L"-shaped bracket 180 of Figures 1-3 allows this type of assembly which, therefore, is considered to be comprised in the scope of the present invention even if not illustrated in the attached drawings for design economy. Furthermore, in the embodiment of Figures 4 and 5 the raised portion 15 is laterally delimited by the longitudinal walls 150 and 150' but the bracket 180 is replaced by a bracket 180' which has an overturned C-shape and is provided with respective sides 152 and 152' opposite to one another extending downwards starting from the upper portion 188. Each side 152/152' faces at least partially one of the longitudinal walls 150 and 150' and ends with an "L"-shaped element provided with a flap 153/153', which is transverse to the respective side 152/152' and carries at least a second wheel 154/154' in rolling contact with a corresponding longitudinal wall 150/150'.

With reference to Figure 5 alone, another embodiment of the support device 1 is shown, in which the bar 12 is modular and comprises two half-bars 12' and 12'' having identical cross-section, each provided with a respective raised portion 15'/15'' and with a respective cylindrical member portion 16'/16''. The two half-bars 12' and 12' can have an identical or different longitudinal extension, without thereby limiting the scope of the present invention and are coupled in a longitudinally continuous manner by selectively releasable connection members 50.

Again, with reference to Figure 5, each raised portion 15'/15' has a different extension from the respective half-bar 12'/122'' and, obviously, from the respective cylindrical member 16'/16''. In this case the connection members 50 comprise at least one screw 52'/52'' housed in the end position in a respective raised portion 15'/15'' and a perforated plate 54 for connecting the two half-bars 12' and 12'', where said perforated plate 54 has at least one hole known and not illustrated for each of the screws 52'/52". In this way, by simply replacing a half-bar 12' or 12'' with a different and given extension, it will be possible to arrange a bar 12 the longitudinal extension of which approximates, according to the need, the longitudinal extension of the keyboard T of the instrument S of the user. It is easy to understand that this embodiment of the bar 12 divided into two half-bars 12' and 12" is compatible only with an embodiment of the slide 18 of Figures 4 and 5, since the face 162 of the bar 12 is free from components of the slide 18. In particular, the presence of the connection members 50 in association with the face 162 of the bar 12 would prevent the free movement of each slide 18 of Figures 1-3 along the entire bar 12 divided into two half-bars 12' and 12'' which, therefore, is incompatible with the embodiment of the slide 18 of Figures 1-3.

As described above, a support device 1, such as the one described and illustrated above, is also designed for those who, for whatever reason, need to limit the muscular efforts related to the movement of any component of the kinematic chain described above which starts from the shoulders and ends with the hands.

The scope of the invention is defined in the appended claims.

## Claims

1. A slide (18) for a support device (1) usable for the practice of piano or an instrument, said slide comprising a frame (10) provided with a bar (12) having a given cross-section, developed along a central axis (AX1) and delimited by two first coupling portions (120) each arranged to couple with a support (14) adjustable in height designed to keep said bar (12) selectively horizontal; said bar (12) having a longitudinal raised portion (15) which carries at the top a cylindrical member (16), which is designed to guide said slide (18) in a longitudinally free and angularly fixed manner by the interposition of an axial bearing (160) and being delimited by a flat longitudinal face (162) parallel to the central axis (AX1) on a side opposite to the cylindrical member (16); **characterized in that** it comprises a rest member (20) carried by an adjustment unit (30) for the respective position relative to said central axis (AX1).

2. The slide according to claim 1, **characterized in that** it rigidly carries a bracket (180) (180') provided with a carriage (182) coupled to said cylindrical member (16) bilaterally in a direction transverse to said central axis (AX1) in a freely sliding manner.

3. The slide according to claim 2, **characterized in that** said adjustment unit (30) comprises an elongated support (32) carried by said slide (18) to which said rest member (20) is screw-coupled to be adjustable in height relative to said central axis (AX1).

4. The slide according to claim 3, **characterized in that** said support (32) extends along an axis (AX2) which is skewed relative to said central axis (AX1).

5. The slide according to claim 4, **characterized in that** said bracket (180) has an upper portion (188) coupled with said slide (18) and supporting said adjustment unit (30).

6. The slide according to claim 5, **characterized in that** said bracket (180) has an overturned L-shape and has a lateral portion (188') transverse to said upper portion (188) which carries said carriage (182), in turn provided with at least one pair of first wheels (1820) (1820') coupled in a rolling manner with said longitudinal face (162).

7. The slide according to claim 5, **characterized in that** said bracket (180') has an overturned C-shape, provided with respective opposite sides (152) (152') and arranged on sides opposite to said upper portion (188) where each of said sides (152) (152') faces at least partially one of said longitudinal walls (150) (150'); each said side (152) (152') ending with a flap transverse to the respective said side (152) (152') and bringing a second wheel (154) (154') into rolling contact with a corresponding said longitudinal wall (150) (150').

8. The slide according to any one of claims 6-7, **characterized in that** said support (32) has a base (320) longitudinally coupled to said slide (18) by a rectilinear motion guide (184) carried at the top by said slide (18) and provided with a groove (186) for said base (320).

9. The slide according to claim 8, **characterized in that** said groove (186) is oriented rectilinear and skewed relative to said central axis (AX1).

10. The slide according to any one of the preceding claims, **characterized in that** said rest member (20) is delimited by a spherically or at least hemispherical shaped surface.

11. A support device (1) comprising a frame (10) provided with a bar (12) having a given cross-section, developed along a central axis (AX1) and delimited by two first coupling portions (120) each arranged to couple with a support (14) adjustable in height designed to keep said bar (12) selectively horizontal; said bar (12) having a longitudinal raised portion (15) which carries at the top a cylindrical member (16) designed to act as a guide for at least one slide (18) coupled in a longitudinally free and angularly fixed manner by the interposition of an axial bearing (160); **characterized in that** said slide (18) is shaped as in any one of the preceding claims.

12. The device according to claim 11, **characterized in that** said bar (12) is made of two half-bars (12') (12") having identical cross-section, each provided with a respective raised portion (15') (15") and with a respective cylindrical member portion (16') (16"); said two half-bars (12') (12') being coupled in a longitudinally continuous manner by means of selectively releasable connection means (50).

13. The device according to claim 12, **characterized in that** said two half-bars (12') (12'') have an identical or different longitudinal extension.

14. The device according to claim 13, **characterized in that** each said raised portion (15') (15') has a different extension than the extension of the corresponding said cylindrical member portion (16') (16').

15. The device according to any one of the claims 11-14, **characterized in that** said connection means (50) comprise at least a first screw (52') (52" ') housed in an end position in a respective said raised portion (15') (15"); a perforated plate (54) connecting the two said half-bars (12')(12") where said perforated plate (54) has at least one hole for each said first screw (52')(52").

## Patentansprüche

1. Ein Gleitteil (18) für eine Stützvorrichtung (1), die für die Übung mit einem Piano oder einem Instrument verwendet werden kann, wobei das Gleitteil einen Rahmen beinhaltet (10), der mit einer Stange (12) versehen ist, die einen gegebenen, entlang einer Mittelachse (AX1) ausgerichteten Querschnitt aufweist und von zwei ersten Kopplungsabschnitten (120) begrenzt ist, die jeweils angeordnet sind, um mit einer Stütze (14) gekoppelt zu werden, die in der Höhe einstellbar ist und dazu ausgelegt ist, die Stange (12) selektiv horizontal zu halten; wobei die Stange (12) einen längsläufigen erhöhten Abschnitt (15) aufweist, der an der Oberseite ein zylindrisches Glied (16) trägt, das dazu ausgelegt ist, das Gleitteil (18) in einer längsläufig freien und winkelig festen Weise durch die Zwischensetzung eines Axiallagers (160) zu führen, und durch eine flache längsläufige Fläche (162) parallel zu der Mittelachse (AX1) auf einer dem zylindrischen Glied (16) entgegengesetzten Seite begrenzt ist; **dadurch gekennzeichnet, dass** es ein Auflageglied (20) beinhaltet, das von einer Einstellungseinheit (30) für die jeweilige Position relativ zu der Mittelachse (AX1) getragen wird.

2. Gleitteil gemäß Anspruch 1, **dadurch gekennzeichnet, dass** es eine Halterung (180) (180') starr trägt, die mit einem Schlitten (182) versehen ist, der mit dem zylindrischen Glied (16) zweiseitig in einer zu der Mittelachse (AX1) querlaufenden Richtung in einer frei gleitenden Weise gekoppelt ist.

3. Gleitteil gemäß Anspruch 2, **dadurch gekennzeichnet, dass** die Einstellungseinheit (30) eine längliche Stütze (32) beinhaltet, die von dem Gleitteil (18) getragen wird, womit das Auflageglied (20) durch Schrauben gekoppelt ist, um in der Höhe relativ zu der Mittelachse (AX1) einstellbar ist.

4. Gleitteil gemäß Anspruch 3, **dadurch gekennzeichnet, dass** sich die Stütze (32) entlang einer Achse (AX2) erstreckt, die relativ zu der Mittelachse (AX1) schräg ist.

5. Gleitteil gemäß Anspruch 4, **dadurch gekennzeichnet, dass** die Halterung (180) einen oberen Abschnitt (188) aufweist, der mit dem Gleitteil (18) gekoppelt ist und die Einstellungseinheit (30) stützt.

6. Gleitteil gemäß Anspruch 5, **dadurch gekennzeichnet, dass** die Halterung (180) eine gestürzte L-Form aufweist und einen seitlichen, zu dem oberen Abschnitt (188) querlaufenden Abschnitt (188') aufweist, der den Schlitten (182) trägt, der wiederum mit mindestens einem Paar ersten Rädern (1820) (1820') versehen ist, die in einer rollenden Weise mit der längsläufigen Fläche (162) gekoppelt sind.

7. Gleitteil gemäß Anspruch 5, **dadurch gekennzeichnet, dass** die Halterung (180') eine gestürzte C-Form aufweist, die mit jeweiligen entgegengesetzten Seiten (152) (152') versehen ist und auf Seiten angeordnet ist, die dem oberen Abschnitt (188) entgegengesetzt sind, wobei die Seiten (152) (152') jeweils mindestens teilweise einer von den längsläufigen Wänden (150) (150') zugewandt sind; wobei jede Seite (152) (152') mit einer zu der jeweiligen Seite (152) (152') querlaufenden Lasche endet und ein zweites Rad (154) (154') mit einer entsprechenden längsläufigen Wand (150) (150') in rollenden Kontakt bringt.

8. Gleitteil gemäß einem der Ansprüche 6-7, **dadurch gekennzeichnet, dass** die Stütze (32) eine Basis (320) aufweist, die längsläufig mit dem Gleitteil (18) durch eine geradlinige Bewegungsführung (184) gekoppelt ist, die an der Oberseite von dem Gleitteil (18) getragen wird und mit einer Rille (186) für die Basis (320) versehen ist.

9. Gleitteil gemäß Anspruch 8, **dadurch gekennzeichnet, dass** die Rille (186) geradlinig und schräg relativ zu der Mittelachse (AX1) orientiert ist.

10. Gleitteil gemäß einem der vorhergehenden Ansprüche, **dadurch gekennzeichnet, dass** das Auflageglied (20) von einer kugelförmig oder mindestens halbkugelförmig geformten Oberfläche begrenzt ist.

11. Eine Stützvorrichtung (1), die einen Rahmen (10) beinhaltet, der mit einer Stange 12) versehen ist, die einen gegebenen, entlang einer Mittelachse (AX1) ausgerichteten Querschnitt aufweist und von zwei ersten Kopplungsabschnitten (120) begrenzt ist, die jeweils angeordnet sind, um mit einer Stütze (14) gekoppelt zu werden, die in der Höhe einstellbar ist und dazu ausgelegt ist, die Stange (12) selektiv horizontal zu halten; wobei die Stange (12) einen längsläufigen erhöhten Abschnitt (15) aufweist, der an der Oberseite ein zylindrisches Glied (16) trägt, das dazu ausgelegt ist, als Führung für mindestens ein Gleitteil (18) zu fungieren, das in einer längsläufig freien und winkelig festen Weise durch die Zwischensetzung eines Axiallagers (160) gekoppelt ist; **dadurch gekennzeichnet, dass** das Gleitteil (18) wie in einem der vorhergehenden Ansprüche geformt ist.

12. Vorrichtung gemäß Anspruch 11, **dadurch gekennzeichnet, dass** die Stange (12) aus zwei Halbstangen (12') (12") gefertigt ist, die einen identischen Querschnitt aufweisen, wobei jede mit einem jeweiligen erhöhten Abschnitt (15') (15") und mit einem jeweiligen zylindrischen Gliedabschnitt (16') (16") versehen ist; wobei die zwei Halbstangen (12') (12') in einer längsläufig kontinuierlichen Weise mittels selektiv lösbarer Verbindungsmittel (50) gekoppelt sind.

13. Vorrichtung gemäß Anspruch 12, **dadurch gekennzeichnet, dass** die zwei Halbstangen (12') (12") identische oder unterschiedliche längsläufige Verlängerungen aufweisen.

14. Vorrichtung gemäß Anspruch 13, **dadurch gekennzeichnet, dass** jeder erhöhte Abschnitt (15') (15') eine von der Verlängerung des entsprechenden zylindrischen Gliedabschnitts (16') (16') unterschiedliche Verlängerung aufweist.

15. Vorrichtung gemäß einem der Ansprüche 11-14, **dadurch gekennzeichnet, dass** die Verbindungsmittel (50) mindestens eine erste Schraube (52') (52") beinhalten, die in einer Endposition in einem jeweiligen erhöhten Abschnitt (15') (15") untergebracht ist; wobei eine gelochte Platte (54) die zwei Halbstangen (12') (12") verbindet, wobei die gelochte Platte (54) mindestens ein Loch fürjede erste Schraube (52') (52") aufweist.

## Revendications

1. Un coulisseau (18) pour un dispositif de support (1) utilisable pour la pratique du piano ou d'un instrument, ledit coulisseau comprenant un cadre (10) pourvu d'une barre (12) ayant une section transversale donnée, développée le long d'un axe central (AX1) et délimitée par deux premières portions d'accouplement (120), chacune étant agencée pour s'accoupler à un support (14) ajustable en hauteur conçu pour maintenir ladite barre (12) sélectivement horizontale ; ladite barre (12) ayant une portion surélevée longitudinale (15) qui porte au niveau du sommet un élément cylindrique (16), lequel est conçu pour guider ledit coulisseau (18) d'une manière longitudinalement libre et angulairement fixe par l'interposition d'un palier axial (160), et étant délimitée par une face longitudinale plate (162) parallèle à l'axe central (AX1) sur un côté opposé à l'élément cylindrique (16) ; **caractérisé en ce qu'**il comprend un élément d'appui (20) porté par une unité d'ajustement (30) pour la position respective par rapport audit axe central (AX1).

2. Le coulisseau selon la revendication 1, **caractérisé en ce qu'**il porte rigidement une console (180) (180') pourvue d'un chariot (182) accouplé audit élément cylindrique (16) bilatéralement dans une direction transversale audit axe central (AX1) d'une manière librement coulissante.

3. Le coulisseau selon la revendication 2, **caractérisé en ce que** ladite unité d'ajustement (30) comprend un support allongé (32) porté par ledit coulisseau (18) auquel ledit élément d'appui (20) est accouplé par vissage afin d'être ajustable en hauteur par rapport audit axe central (AX1).

4. Le coulisseau selon la revendication 3, **caractérisé en ce que** ledit support (32) s'étend le long d'un axe (AX2) qui est en biais par rapport audit axe central (AX1).

5. Le coulisseau selon la revendication 4, **caractérisé en ce que** ladite console (180) a une portion supérieure (188) accouplée audit coulisseau (18) et supportant ladite unité d'ajustement (30).

6. Le coulisseau selon la revendication 5, **caractérisé en ce que** ladite console (180) a une forme en L renversé et a une portion latérale (188') transversale à ladite portion supérieure (188) qui porte ledit chariot (182), à son tour pourvu d'au moins une paire de premières roues (1820) (1820') accouplées d'une manière roulante à ladite face longitudinale (162).

7. Le coulisseau selon la revendication 5, **caractérisé en ce que** ladite console (180') a une forme en C renversé, pourvue de côtés opposés respectifs (152) (152') et agencée sur des côtés opposés à ladite portion supérieure (188) où chacun desdits côtés (152) (152') fait face, au moins en partie, à l'une desdites parois longitudinales (150) (150') ; chaque dit côté (152) (152') se terminant par un rabat transversal audit côté respectif (152) (152') et mettant une deuxième roue (154) (154') en contact de roulement avec une dite paroi longitudinale correspondante (150) (150').

8. Le coulisseau selon l'une quelconque des revendications 6 à 7, **caractérisé en ce que** ledit support (32) a une base (320) longitudinalement accouplée audit coulisseau (18) par un guide de mouvement rectiligne (184) porté au niveau du sommet par ledit coulisseau (18) et pourvu d'une rainure (186) pour ladite base (320).

9. Le coulisseau selon la revendication 8, **caractérisé en ce que** ladite rainure (186) est orientée de manière rectiligne et en biais par rapport audit axe central (AX1).

10. Le coulisseau selon l'une quelconque des revendications précédentes, **caractérisé en ce que** ledit élément d'appui (20) est délimité par une surface de forme sphérique ou au moins hémisphérique.

11. Un dispositif de support (1) comprenant un cadre (10) pourvu d'une barre (12) ayant une section transversale donnée, développée le long d'un axe central (AX1) et délimitée par deux premières portions d'accouplement (120), chacune étant agencée pour s'accoupler à un support (14) ajustable en hauteur conçu pour maintenir ladite barre (12) sélectivement horizontale ; ladite barre (12) ayant une portion surélevée longitudinale (15) qui porte au niveau du sommet un élément cylindrique (16) conçu pour agir en tant que guide pour au moins un coulisseau (18) accouplé d'une manière longitudinalement libre et angulairement fixe par l'interposition d'un palier axial (160) ; **caractérisé en ce que** ledit coulisseau (18) est de la même forme que dans l'une quelconque des revendications précédentes.

12. Le dispositif selon la revendication 11, **caractérisé en ce que** ladite barre (12) est constituée de deux demi-barres (12') (12") ayant une section transversale identique, chacune étant pourvue d'une portion surélevée respective (15') (15") et d'une portion d'élément cylindrique respective (16') (16") ; lesdites deux demi-barres (12') (12') étant accouplées d'une manière longitudinalement continue au moyen de moyens de raccordement sélectivement libérables (50).

13. Le dispositif selon la revendication 12, **caractérisé en ce que** lesdites deux demi-barres (12') (12") ont une extension longitudinale identique ou différente.

14. Le dispositif selon la revendication 13, **caractérisé en ce que** chaque dite portion surélevée (15') (15') a une extension différente de l'extension de ladite portion d'élément cylindrique correspondante (16') (16').

15. Le dispositif selon l'une quelconque des revendications 11 à 14, **caractérisé en ce que** lesdits moyens de raccordement (50) comprennent au moins une première vis (52') (52") logée dans une position d'extrémité dans une dite portion surélevée respective (15') (15") ; une plaque perforée (54) raccordant les deux dites demi-barres (12') (12") où ladite plaque perforée (54) a au moins un trou pour chaque dite première vis (52') (52").
